(19) Europäisches Patentamt
European Patent Office
Office européen des brevets

(11) **EP 3 173 581 B1**

(12) **EUROPÄISCHE PATENTSCHRIFT**

(45) Veröffentlichungstag und Bekanntmachung des Hinweises auf die Patenterteilung:
**02.12.2020 Patentblatt 2020/49**

(51) Int Cl.:
**F04D 29/32** *(2006.01)*      **F04D 29/54** *(2006.01)*
**F01D 5/14** *(2006.01)*      **F04D 19/02** *(2006.01)*

(21) Anmeldenummer: **16195410.2**

(22) Anmeldetag: **25.10.2016**

(54) **VERDICHTER EINER STRÖMUNGSMASCHINE**

COMPRESSOR OF A TURBOMACHINE

COMPRESSEUR DE TURBOMACHINE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.11.2015 DE 102015223210**

(43) Veröffentlichungstag der Anmeldung:
**31.05.2017 Patentblatt 2017/22**

(73) Patentinhaber: **MTU Aero Engines AG**
**80995 München (DE)**

(72) Erfinder:
• **Schneider, Tim**
  **80634 München (DE)**
• **Elorza Gomez, Sergio**
  **80997 München (DE)**

(56) Entgegenhaltungen:
**EP-A2- 2 431 577      GB-A- 710 300**
**GB-A- 1 153 134**

EP 3 173 581 B1

**Beschreibung**

Die Erfindung betrifft einen Verdichter einer Strömungsmaschine und eine Strömungsmaschine.

In herkömmlichen Axialverdichtern von Strömungsmaschinen wie Flugtriebwerke und statischen Gasturbinen fällt ein radial gemittelter Reaktionsgrad im vorderen Verdichterbereich von einem eintrittsseitigen Maximum auf ein Minimum ab. Der lokale Reaktionsgrad lässt sich nach der folgenden Formel, basierend auf Metallwinkeln, vereinfacht berechnen:

$$ R = \frac{\tan\dfrac{\beta 1 + \beta 2}{2}}{\tan\dfrac{\beta 1 + \beta 2}{2} + \tan\dfrac{\alpha 1 + \alpha 2}{2}} $$

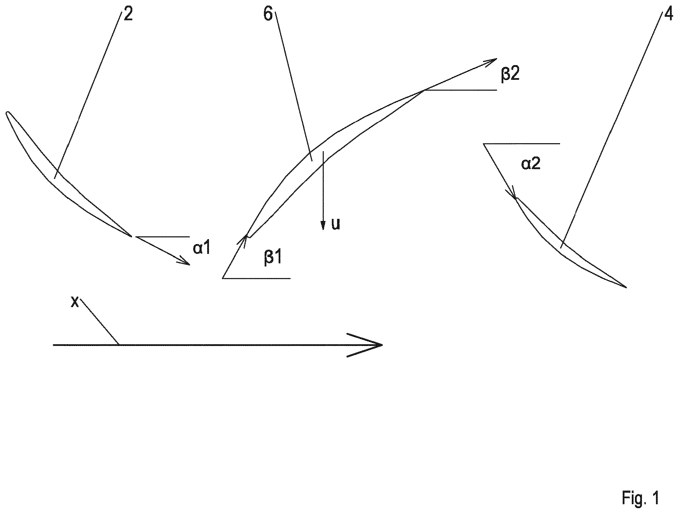

Die Winkel $\alpha 1$, $\alpha 2$, $\beta 1$, $\beta 2$ werden, wie in Figur 1 dargestellt, zwischen Tangenten der jeweiligen Skelettlinie und einer axialen Strömungsrichtung x der Strömungsmaschine abgetragen. $\alpha 1$ wird von der Hinterkante einer Leitschaufel 2 einer Leitschaufelreihe n-1 abgetragen. $\alpha 2$ wird zur Anströmkante einer Leitschaufel 4 einer Leitschaufelreihe n hin abgetragen. $\beta 1$ wird zur Anströmkante einer Laufschaufel 6 einer Laufschaufelreihe n hin abgetragen. $\beta 2$ wird von der Hinterkante der Laufschaufel 6 der Laufschaufelreihe n abgetragen. Dabei läuft die Laufschaufel 6 bzw. die Laufschaufelreihe n in Umfangsrichtung u zwischen den Leitschaufeln 2, 4 bzw. den Leitschaufelreihen n-1, n hindurch. Der Buchstabe n kennzeichnet ganzzahlige Vielfache von 1, 2,.... Gewöhnlich deckt der Reaktionsgrad bei Verdichtern einen Bereich zwischen 0,5 und 1,0 ab. Turbinen decken gewöhnlich Reaktionsgrade von 0,0...0,05 bis 0,5 ab. Dem Abfallen des Reaktionsgrads stromaufwärts des ersten nichtverstellbaren Leitgitters folgt bei bekannten Strömungsmaschinen ein Anstieg des Reaktionsgrads bis zum Verdichteraustritt. Durch den Anstieg lässt sich im hinteren Verdichterbereich und insbesondere am Austrittsleitgitter des Verdichters ein Restdrall im Hauptstrom reduzieren, allerdings verursacht der Anstieg eine hohe Belastung der hinteren Stufen, was zu Wirkungsgradreduzierungen führt.

GB 710 300 A betrifft die gleichmäßige Lastverteilung durch die Strömung in einem Axialverdichter auf dessen Schaufeln. Um die gleichmäßige Lastverteilung zu erreichen wird vorgeschlagen, den Hauptströmungskanal von hinter der ersten Stufen an bis zu der letzten Stufe progressiv stromabwärts zu verkleinern.

Aufgabe der Erfindung ist es, einen Verdichter einer Strömungsmaschine mit einem hohen Wirkungsgrad, sowie eine Strömungsmaschine mit einem hohen Wirkungsgrad zu schaffen.

Diese Aufgabe wird gelöst durch einen Verdichter mit den Merkmalen des Patentanspruchs 1 und durch eine Strömungsmaschine mit den Merkmalen des Patentanspruchs 6.

Bei einem erfindungsgemäßen Verdichter einer Strömungsmaschine, beispielsweise ein Flugtriebwerk, wird in Richtung eines Hauptstroms betrachtet ein radial gemittelter Reaktionsgrad, der in einem vorderen Verdichterbereich von einem Maximum auf eine Minimum abgefallen ist, über einen mittleren Verdichterbereich bis in einen hinteren Verdichterbereich konstant bzw. nahezu konstant gehalten, wobei im hinteren Verdichterbereich ein radial gemittelter Reaktionsgrad eingestellt wird, der näher am Minimum als am Maximum liegt. Zudem wird im Mittelschnitt ein Restdrall von mindestens 47° eingestellt.

Durch den niedrigen Reaktionsgrad bis in den hinteren Verdichterbereich und den somit nicht bzw. nicht wesentlich ansteigenden Reaktionsgrad ab der Verdichtermitte bis zum Verdichteraustritt werden die Rotor-Machzahlen niedrig gehalten. Dies führt zu einer Wirkungsgradverbesserung der Stufen. Die hinteren Stufen werden bis auf ein Austrittsleitgitter entlastet, wodurch die Stator-Schaufelzahlen reduziert werden können. Hierdurch wird eine Verbesserung des Verdichterwirkungsgrades gegenüber herkömmlichen Strömungsmaschinen erreicht. Der erfindungsgemäße Verdichter weist somit einen hohen Wirkungsgrad auf. Die Schaufeln können auch derart zueinander ausgerichtet werden, dass im hinteren Verdichterbereich ein Restdrall von 50° bis 60° abgebaut werden kann.

Besonders günstige Ergebnisse lassen sich erzielen, wenn der radial gemittelte Reaktionsgrad vom Minimum bis zum hinteren Verdichterbereich nahe von 0,5 oder leicht höher, beispielweise bis zu 10% höher, eingestellt wird.

Ein Wert des lokalen Reaktionsgrads auf halber radialer Höhe zwischen der Verdichternabe und dem Verdichtergehäuse kann gegenüber einem Mittelwert bei linearem radialen Verlauf reduziert werden. Durch diese Maßnahme wird der lokale Reaktionsgrad in den Seitenwandbereichen des von dem Hauptstrom durchströmten Ringraums angehoben, was eine Stabilisierung der Grenzschichten und somit eine Reduzierung von Seitenwandverlusten bewirkt. Hierdurch steigt wiederum der Pumpgrenzabstand.

Ein erfindungsgemäßer Verdichter einer Strömungsmaschine hat eine derartige Schaufelausrichtung bzw. Schaufelanordnung, dass im hinteren Verdichterbereich ein radial gemittelter Reaktionsgrad eingestellt ist, der näher am Minimum als am Maximum liegt und im Mittelschnitt ein Restdrall von mindestens 47° vorliegt.

Zum Niedrighalten des Reaktionsgrades und zum Abbauen des Restdralls kann ein Austrittsleitgitter beispielsweise eine nabenseitige und/oder gehäuseseitige Seitenwandkonturierung haben. Bevorzugterweise ist die zumindest eine Seitenwandkonturierung nichtumfangssymmetrisch.

Alternativ oder zusätzlich zur Seitenwandkonturierung kann der Verdichter im hinteren Verdichterbereich zum Einstellen des niedrigen Reaktionsgrades und zum Abbauen des Restdralls ein Austrittsleitgitter in Tandemausführung mit zwei, drei oder mehr Schaufelreihen haben.

Eine bevorzugte Strömungsmaschine hat einen erfindungsgemäßen Verdichter. Hierdurch zeichnet sich die Strömungsmaschine durch einen hohen Wirkungsgrad aus.

Sonstige vorteilhafte Ausführungsbeispiele der Erfindung sind Gegenstand weiterer Unteransprüche.

Im Folgenden werden bevorzugte Ausführungsbeispiele der Erfindung anhand von schematischen Darstellungen näher erläutert. Es zeigen:

Figur 1      ein Schaubild zur Definition eines verdichterseitigen Reaktionsgrades,

Figur 2      erfindungsgemäße Verläufe des radial gemittelten Reaktionsgrads in Verdichterlängsrichtung im Vergleich zu einem Verlauf eines bekannten verdichterseitigen Reaktionsgrades, und

Figur 3      einen radialen Verlauf eines erfindungsgemäßen Reaktionsgrads im Vergleich zu einem radialen Verlauf eines bekannten verdichterseitigen Reaktionsgrades.

Wie bereits eingangs erwähnt, ist in Figur 1 dargestellt, wie sich ein verdichterseitiger Reaktionsgrad einer Strömungsmaschine berechnen lässt. Diese Berechnung bzw. dieses Verständnis wird auch den erfindungsgemäßen Reaktionsgraden zugrunde gelegt.

Der lokale Reaktionsgrad R berechnet sich demnach nach der folgenden Formel:

$$R = \frac{\tan\dfrac{\beta 1 + \beta 2}{2}}{\tan\dfrac{\beta 1 + \beta 2}{2} + \tan\dfrac{\alpha 1 + \alpha 2}{2}}$$

Die Winkel $\alpha 1$, $\alpha 2$, $\beta 1$, $\beta 2$ werden, wie in Figur 1 dargestellt, zwischen Tangenten der jeweiligen Skelettlinie und einer axialen Strömungsrichtung x der Strömungsmaschine abgetragen. $\alpha 1$ wird von der Hinterkante einer Leitschaufel 2 einer Leitschaufelreihe n-1 abgetragen. $\alpha 2$ wird zur Anströmkante einer Leitschaufel 4 einer Leitschaufelreihe n hin abgetragen. $\beta 1$ wird zur Anströmkante einer Laufschaufel 6 einer Laufschaufelreihe n hin abgetragen. $\beta 2$ wird von der Hinterkante der Laufschaufel 6 der Laufschaufelreihe n abgetragen. Dabei läuft die Laufschaufel 6 bzw. die Laufschaufelreihe n in Umfangsrichtung u zwischen den Leitschaufeln 2, 4 bzw. den Leitschaufelreihen n-1, n hindurch. Der Buchstabe n kennzeichnet ganzzahlige Vielfache von 1, 2,....

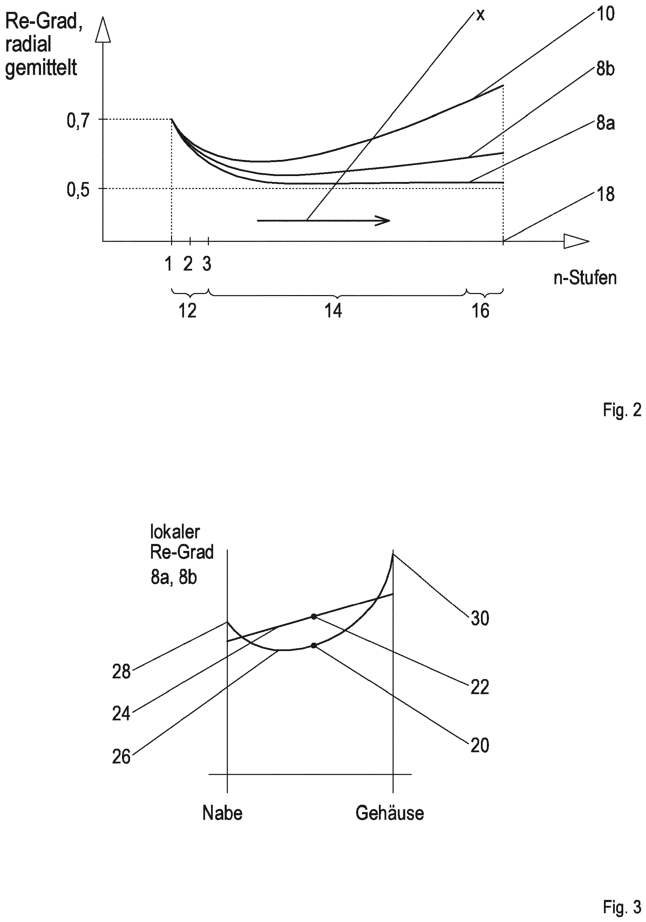

In Figur 2 sind erfindungsgemäße Verläufe eines radial gemittelten Reaktionsgrades 8a, 8b eines Verdichters einer Strömungsmaschine, insbesondere ein Flugtriebwerk, im Vergleich zu einem herkömmlichen Verlauf eines radial gemittelten Reaktionsgrads 10 gezeigt.

Die Reaktionsgrade 8a, 8b, 10 sind in Längsrichtung des Verdichters bzw. in Strömungsrichtung x eines die Strömungsmaschine durchströmenden Hauptstroms über einen vorderen Verdichterbereich 12, einen mittleren Verdichterbereich 14 und einen hinteren Verdichterbereich 16 skizziert. Der vordere Verdichterbereich 12 wird statorseitig beispielsweise von drei verstellbaren Leitschaufelreihen gebildet. Der mittlere Verdichterbereich 14 weist statorseitig eine Vielzahl von nichtverstellbaren Leitschaufelreihen auf. Der hintere Verdichterbereich 16 hat statorseitig neben einer Vielzahl von nichtverstellbaren Leitschaufelreihen insbesondere als letzte Leitschaufelreihe ein Austrittsleitgitter 18. Die in Figur 2 gezeigte Ausdehnungen der Verdichterbereiche 12, 14 und 16 in Strömungsrichtung x ist rein exemplarisch und kann selbstverständlich auch variieren. So kann beispielsweise der vordere Verdichterbereich 12 auch weniger als drei Leitschaufelreihen oder mehr als drei verstellbare Leitschaufelreihen wie beispielsweise fünf Leitschaufelreihen aufweisen.

Herkömmlicherweise fällt der radial gemittelte Reaktionsgrad 10 im vorderen Verdichterbereich 12 von einem Maximum, beispielsweise 0,7, steil auf ein Minimum, beispielsweise 0,6, ab. Mit Beginn des mittleren Verdichterbereichs 14 steigt der herkömmliche Reaktionsgrad 10 langsam bis zum Austrittsleitergitter 18 des hinteren Verdichterbereichs 16. Hierdurch werden sämtliche Leitschaufeln im mittleren Verdichterbereich 14 und im hinteren Verdichterbereich 16 stark belastet und der Wirkungsgrad im hinteren Verdichterbereich 16 sinkt stark ab.

Erfindungsgemäß wird der radial gemittelte 8a, 8b nun so eingestellt, dass er nach dem steilen Abfall im vorderen Verdichterbereich 12 von einem Maximum auf ein Minimum über dem mittleren Verdichterbereich 14 bis in den hinteren Verdichterbereich 16 und insbesondere bis zum Austrittsleitgitter 18 konstant bzw. nahezu konstant beim Minimum, hier 0,5, gehalten wird. Hierdurch wird die statorseitige Belastung des hinteren Verdichterbereichs 16 generell reduziert und somit der Wirkungsgrad gesteigert. Es wird lediglich das Austrittsleitgitter 18 durch den abzubauenden Restdrall des Hauptstroms stark belastet. Bevorzugterweise liegt im Mittelschnitt ein Restdrall von mindestens 47° bezogen auf die Strömungsrichtung x vor. Möglich sind auch Restdrallwinkel von 50° bis 60°.

Konstruktiv lassen sich die erfindungsgemäßen Reaktionsgradverläufe dadurch erreichen, dass in dem Austrittsleitgitter 18 entweder eine statorseitige und/oder rotorseitige Seitenwandkonturierung, bevorzugterweise eine nichtumfangssymmetrische Seitenwandkonturierung, vorgenommen wird (Reaktionsgrad 8b). Alternativ oder ergänzend ist das Austrittsleitgitter 18 in Tandembauweise ausgeführt (Reaktionsgrad 8a). Hierdurch lässt sich der Reaktionsgradverlauf grundsätzlich näher am Minimum halten als bei reiner Seitenwandkonturierung.

Gemäß Figur 3 wird es bevorzugt, wenn ein mittlerer Wert 20 des lokalen Reaktionsgrads 8a, 8b auf halber radialer Höhe zwischen der Verdichternabe und dem Verdichtergehäuse gegenüber einem Mittelwert 22 bei linearem radialen Verlauf 24 reduziert wird. Der lineare Verlauf 24 ist dabei derart, dass ein nabenseitiger Wert 28 des Reaktionsgrads kleiner als ein gehäuseseitiger Wert 30 des Reaktionsgrads 8a, 8b ist. Durch das Absenken des mittleren Reaktionsgradwertes ergibt sich ein wannenartiger radialer Verlauf 26 der lokalen Reaktionsgrade 8a, 8b, wodurch die seitenwandseitigen Reaktionsgradwerte 30, 28 gegenüber dem linearen Verlauf 24 heraufgesetzt werden. Dies bewirkt eine Stabilisierung der Seitenwandgrenzschicht und führt somit zu einer Steigerung des Pumpgrenzabstandes, so dass die Stabilität des Verdichters aufgrund der Senkung des mittleren Wertes des Reaktionsgrades 8a, 8b gegenüber einem ursprünglichen linearen Verlauf 24 erhöht wird.

Bezugszeichenliste

2    Leitschaufel - Stufe n-1
4    Leitschaufel - Stufe n
6    Laufschaufel - Stufe n
8a   Reaktionsgrad
8b   Reaktionsgrad
10   Reaktionsgrad
12   vorderer Verdichterbereich
14   mittlerer Verdichterbereich
16   hinterer Verdichterbereich
18   Austrittsleitgitter
20   mittlerer Wert
22   Mittelwert
24   linearer Verlauf
26   wannenartiger Verlauf
28   nabenseitiger Wert
30   gehäuseseitiger Wert

R    Reaktionsgrad
x    Strömungsrichtung
u    Umfangsrichtung

Patentansprüche

1.  Verdichter einer Strömungsmaschine, mit

einem vorderen Verdichterbereich (12),
einem mittleren Verdichterbereich (14) und
einem hinteren Verdichterbereich (16) mit einem Austrittsleitgitter (18),
wobei in Richtung eines Hauptstroms betrachtet ein radial gemittelter Reaktionsgrad (8a, 8b), der in dem vorderen Verdichterbereich (12) von einem Maximum auf ein Minimum abgefallen ist, über den mittleren Verdichterbereich (14) bis in den hinteren Verdichterbereich (16) konstant bzw. nahezu konstant gehalten wird, wobei im hinteren Verdichterbereich (16) ein radial gemittelter Reaktionsgrad (8a, 8b) eingestellt wird, der näher am Minimum als am Maximum liegt, und im hinteren Verdichterbereich (16) vor dem Austrittsleitgitter (18) im Mittelschnitt ein Restdrall von mindestens 47° eingestellt wird.

2.  Verdichter nach Patentanspruch 1, wobei der radial gemittelte Reaktionsgrad (8a, 8b) vom Minimum bis zum hinteren Verdichterbereich gleich 0,5 oder bis zu 10% höher eingestellt wird.

3.  Verdichter nach Patentanspruch 1 oder 2, wobei ein Wert (20) des lokalen Reaktionsgrads (8a, 8b) auf halber radialer Höhe zwischen einer Verdichternabe und dem Verdichtergehäuse gegenüber einem Mittelwert (22) bei linearem radialen Verlauf (24) reduziert wird.

4.  Verdichter nach Patentanspruch 3, wobei der Verdichter im hinteren Verdichterbereich (16) eine nabenseitige und/oder gehäuseseitige Seitenwandkonturierung hat.

5.  Verdichter nach Patentanspruch 3 oder 4, wobei im hinteren Verdichterbereich (16) ein Austrittsleitgitter (18) in Tandemausführung angeordnet ist.

6.  Strömungsmaschine, mit einem Verdichter nach einem der Patentansprüche 1-5.

Claims

1.  Compressor of a turbomachine, comprising

a front compressor region (12),
a middle compressor region (14) and
a rear compressor region (16) having an outlet guide baffle (18),

a radially averaged degree of reaction (8a, 8b) which has fallen from a maximum to a minimum in the front compressor region (12) being kept constant or almost constant, with respect to the direction of a main flow, over the middle compressor region (14) as far as the rear compressor region (16), a radially averaged degree of reaction (8a, 8b) which is closer to the minimum than to the maximum being set in the rear compressor region (16), and a residual swirl of at least 47° being set in the rear compressor region (16) upstream of the outlet guide baffle (18) in the middle section.

2.  Compressor according to claim 1, wherein the radially averaged degree of reaction (8a, 8b) from the minimum up to the rear compressor region is set equal to 0.5 or up to 10% higher.

3. Compressor according to either claim 1 or claim 2, wherein a value (20) of the local degree of reaction (8a, 8b) at half the radial height between a compressor hub and the compressor housing is reduced with respect to a mean value (22) in a linear radial curve (24).

4. Compressor according to claim 3, wherein the compressor has a side-wall contour on the hub side and/or on the housing side in the rear compressor region (16).

5. Compressor according to either claim 3 or claim 4, wherein an outlet guide baffle (18) in tandem form is arranged in the rear compressor region (16).

6. Turbomachine, having a compressor according to any of claims 1-5.

## Revendications

1. Compresseur d'une turbomachine, comportant

    une zone de compresseur avant (12),
    une zone de compresseur centrale (14) et
    une zone de compresseur arrière (16) comportant une grille de guidage de sortie (18),
    un degré de réaction moyenné radialement (8a, 8b), qui, vu dans le sens d'un flux principal, a chuté d'un maximum à un minimum dans la zone de compresseur avant (12), étant maintenu constant ou presque constant sur la zone de compresseur centrale (14) jusqu'à la zone de compresseur arrière (16), un degré de réaction moyenné radialement (8a, 8b) étant réglé dans la zone de compresseur arrière (16), lequel degré de réaction moyenné radialement est plus proche du minimum que du maximum, et une torsion résiduelle d'au moins 47° étant réglée dans la coupe centrale dans la zone de compresseur arrière (16) en amont de la grille de guidage de sortie (18).

2. Compresseur selon la revendication 1, dans lequel le degré de réaction moyenné radialement (8a, 8b) est réglé de façon à être égal à 0,5 ou jusqu'à 10 % plus élevé du minimum jusqu'à la zone de compresseur arrière.

3. Compresseur selon la revendication 1 ou 2, dans lequel, lors d'une course radiale linéaire (24), une valeur (20) du degré de réaction local (8a, 8b) est réduite à la moitié de la hauteur radiale entre un moyeu de compresseur et le carter de compresseur par rapport à une valeur moyenne (22).

4. Compresseur selon la revendication 3, dans lequel le compresseur présente un contour de paroi latérale côté moyeu et/ou côté carter dans la zone de compresseur arrière (16).

5. Compresseur selon la revendication 3 ou 4, dans lequel une grille de guidage de sortie (18) configurée comme un tandem est disposée dans la zone de compresseur arrière (16).

6. Turbomachine comportant un compresseur selon l'une des revendications 1 à 5.

Fig. 1

Re-Grad,
radial
gemittelt

0,7

0,5

x

10

8b

8a

18

1 2 3

12        14        16

n-Stufen

Fig. 2

lokaler
Re-Grad
8a, 8b

28

24

26

30

22

20

Nabe        Gehäuse

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 710300 A